# EUROPÄISCHE PATENTANMELDUNG

(11) **EP 2 636 920 A2**
(43) Veröffentlichungstag der Anmeldung: **11.09.2013**
(21) Anmeldenummer: 13154534.5
(22) Anmeldetag: 08.02.2013
(51) Int. Cl.: F16F 9/46

(54) **Verstellbares Dämpfventil**

(30) Priorität: 07.03.2012 DE 102012203542
(71) Anmelder: ZF Friedrichshafen AG, 88038 Friedrichshafen (DE)
(72) Erfinder: Sauerbrey, Achim, 88046 Friedrichshafen (DE)

(57) **Zusammenfassung**

Verstellbares Dämpfventil (1) mit einem Ventilgehäuse (5), in dem ein Spulengehäuse (43) und ein ringförmiger Rückschlusskörper (57) angeordnet sind, die magnetisch leitend mit einem Ventilanker (9) verbunden sind, wobei der Rückschlusskörper (57) das Spulengehäuse (43) über mehrere Fenster (53;55) radial durchdringt und randseitig Abflachungen (61) aufweist, wobei das mindestens ein Fenster (53) im Spulengehäuse (43) eine Breite aufweist, die mindestens der Breite des Rückschlusskörpers (57) in mindestens einer Montageposition entspricht, so dass der Rückschlusskörper (57) über das mindestens eine Fenster (53) radial in das Spulengehäuse (43) einschiebbar ist.

## Beschreibung

Die Erfindung betrifft ein verstellbares Dämpfventil gemäß dem Oberbegriff von Patentanspruch 1.

Die DE 10 2009 059 808 A1 beschreibt ein verstellbares Dämpfventil, dessen Aktuator im Hinblick auf seine Herstellbarkeit optimiert ist. Ein Kerngedanke besteht darin, dass ein massiver scheibenförmiger Rückschlusskörper verwendet wird, der im Produktionsprozess umspritzt wird. Die massive Bauform schränkt jedoch die Materialauswahl für den Rückschlusskörper ein. Des Weiteren müssen Stanzgrate aufwändig entfernt werden.

Gemäß der DE 10 2009 059 808 A1 wird ein Spulengehäuse spritztechnisch hergestellt und umfasst eine Spulenaufnahme mit einem Boden. Das Spulengehäuse verfügt über radiale Fenster, über die der Rückschlusskörper mit der Innenwandung eines Ventilgehäuses in leitfähiger Verbindung steht. Der Rückschlusskörper wird von der Wandung des Spulengehäuses derart umschlossen, so dass eine axiale und radiale Fixierung besteht.

Die Abdichtung der Spule erfolgt über zwei stirnseitige O-Ringe und einen umlaufenden O-Ring an einer zylindrischen Mantelfläche des Spulengehäuses. Insbesondere die stirnseitigen O-Ringe könnten bei der Montage aus ihrer vorbestimmten Einbaulage herausrutschen und somit nicht ihre optimale Dichtfunktion entfalten.

Die Aufgabe der vorliegenden Erfindung besteht darin, das verstellbare Dämpfventil im Hinblick auf seine Herstellbarkeit noch weiter zu optimieren.

Erfindungsgemäß wird die Aufgabe dadurch gelöst, dass das mindestens ein Fenster im Spulengehäuse eine Breite aufweist, die mindestens der Breite des Rückschlusskörpers in mindestens einer Montageposition entspricht, so dass der Rückschlusskörper über das mindestens eine Fenster radial in das Spulengehäuse einschiebbar ist.

Der große Vorteil der Erfindung besteht darin, dass der Rückschlusskörper nach der Fertigstellung des Spulengehäuses montierbar ist. Dadurch ist der Rückschlusskörper während des Montagevorgangs auch keinen mechanischen oder thermischen Belastungen ausgesetzt. Des Weiteren muss der Rückschlusskörper während eines Umspritzungsprozesses der Spule nicht zur Spule positioniert sein. Die Spulenherstellung und die Positionierung des Rückschlusskörpers stellen getrennte Montageschritte dar.

In weiterer vorteilhafter Ausgestaltung weist das Spulengehäuse eine Führungsbahn für die Aufnahme des Rückschlusskörpers auf. Der Rückschlusskörper wird an dem für die Montage vorgesehenen Fenster im Spulengehäuse angesetzt und gleitet entlang der Führungsbahn in die Montageendstellung. Dadurch wird die Montagebewegung leicht automatisierbar.

Gemäß einem vorteilhaften Unteranspruch ist das Fenster zur Montage des Rückschlusskörpers breiter ausgeführt als ein mindestens zweites Fenster. Folglich kann der Rückschlusskörper bei der Montage nicht versehentlich über die vorbestimmte Position hinaus geschoben werden.

Zusätzlich kann man vorsehen, dass der Rückschlusskörper mindestens einen Montageanschlag aufweist. Der Anschlag für den Rückschlusskörper stellt unabhängig von seiner konkreten konstruktiven Ausgestaltung vorteilhafterweise eine Kontaktfläche dar, die den magnetischen Widerstand innerhalb des magnetischen Flusses reduziert.

Um innerhalb des Ventilgehäuses einerseits einen möglichst guten magnetischen Fluss zu erreichen und anderseits das Eindringen von Fremdkörpern zu verhindern, verschließt der Rückschlusskörper in der Endmontagestellung die Fenster im Spulenkörper.

Damit der Rückschlusskörper wechselseitig im Spulengehäuse montierbar ist, weist der Rückschlusskörper an seiner Umfangskontur zwei spiegelbildliche Anschläge auf.

Im Rahmen einer weiteren Lösung ist vorgesehen, dass die Baueinheit des Spulengehäuses angespritzte Dichtungselemente aufweist, die am Ventilgehäuse anliegen. Im Vergleich zum aufgezeigten Stand der Technik werden drei O-Ringe eingespart, ohne dass die Dichtqualität sinkt.

Des Weiteren ist vorgesehen, dass die Dichtungselemente die Baueinheit innerhalb des Ventilgehäuses positionieren. Die Positionierungsfunktion erstreckt sich auf die Längsrichtung aber auch auf die Mittelachse des Ventilgehäuses. Neben der Dichtfunktion und der Positionierfunktion übernehmen die Dichtelemente auch die Funktion des Wärmeausgleichs.

Die Idee der angespritzten Dichtelemente lässt es auch zu, dass die Fenster eine umlaufende Dichtleiste aufweisen. Man kann also dort eine Dichtung vorsehen, wo es funktional besonders wichtig ist und nicht nur dort, wo der Bauraum für einen klassischen O-Ring zur Verfügung steht.

Eine weitere Teillösung, die mit den beiden vorstehenden Lösungskonzepten kombinierbar ist, besteht darin, dass der Rückschlusskörper von geschichteten Blechelementen gebildet wird.

Dadurch können für den Rückschlusskörper Materialien verwenden werden, die bislang in der einstückigen Ausführung nicht zur Verfügung standen oder die nur sehr schwer zu bearbeiten waren.

Um trotz der geschichteten Bauweise des Rückschlusskörpers eine handhabbare Baueinheit zu erreichen, sind die geschichteten Blechelemente mittels Stanzpaketieren miteinander verbunden.

Anhand der folgenden Figurenbeschreibung soll die Erfindung näher erläutert werden.

Es zeigt:
- Fig. 1 und 2: Verstellbares Dämpfventil im Längsschnitt
- Fig. 3a u. 3b: Spulengehäuse im Längsschnitt
- Fig. 3c - 3f: Dichtungselemente als Detail
- Fig. 4 und 5: Spulenträger in Ansichten
- Fig. 6 bis 9: Rückschlusskörper als Einzelteil
- Fig. 10 bis 11: Spulengehäuse mit Rückschlusskörper

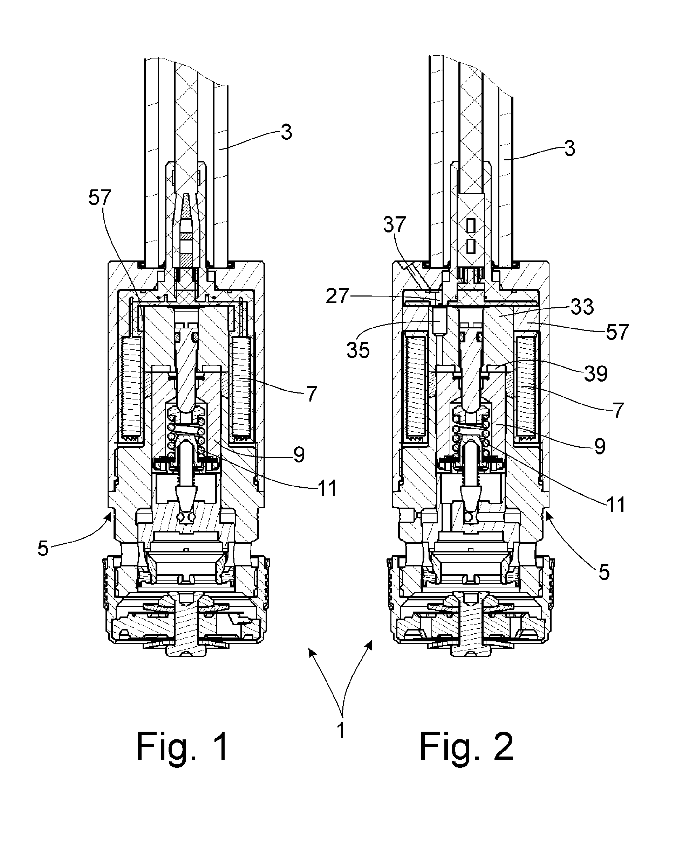

Die Figur 1 und 2 zeigen ein verstellbares Dämpfventil 1 an einer hohlen Kolbenstange 3. Das verstellbare Dämpfventil 1 verfügt in einem Ventilgehäuse 5 über einen Aktuator, der eine Spule 7 umfasst, die auf einen axial beweglichen Ventilanker 9 gegen die Kraft einer Ventilfeder 11 eine Stellkraft ausübt. Die Funktionsweise des verstellbaren Dämpfventils ist bereits allgemein aus der DE 198 22 448 C2 bekannt.

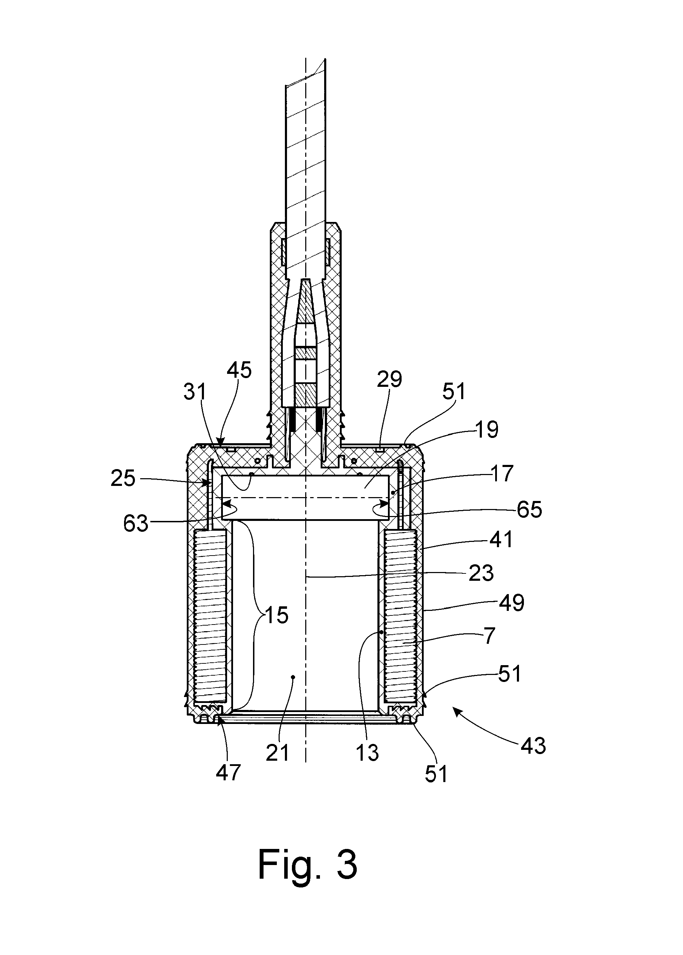

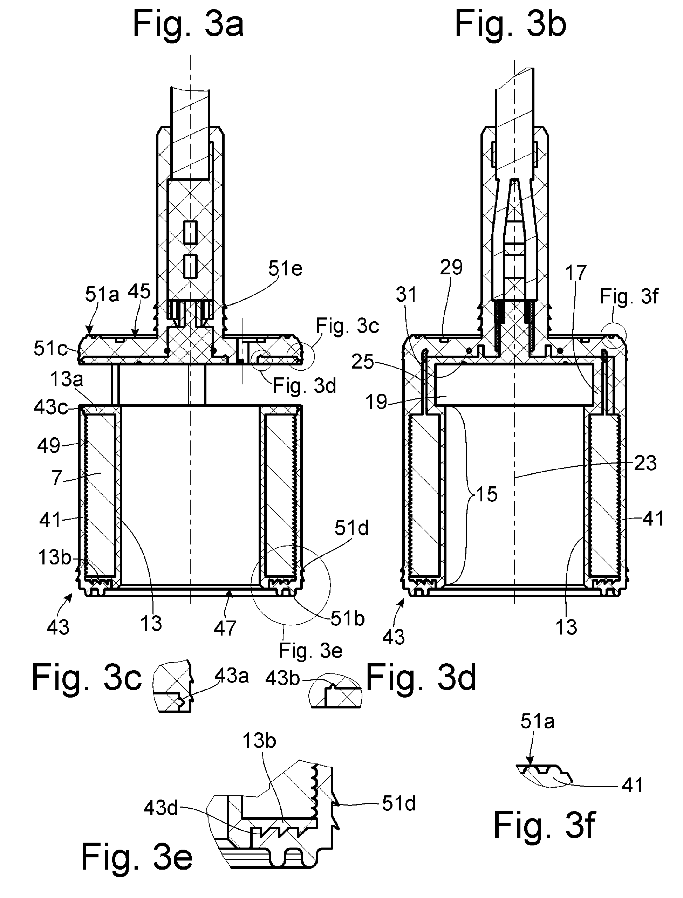

Die Spule 7 ist auf einem Spulenträger 13 gewickelt, der in der Figur 3 dargestellt ist. Der Spulenträger 13 verfügt über einen Hülsenabschnitt 15 mit einer Nut für die Wicklung der Spule. Dem Hülsenabschnitt 13 schließt sich an einem Ende ein Boden 17 an, der eine den Boden 17 vollständig durchsetzende Queröffnung 19 aufweist. Die Queröffnung 19 und eine Axialöffnung 21 sind miteinander verbunden und schneiden sich in der Hauptachse 23 des Spulenträgers 13.

In der Zusammenschau der Fig. 1 bis 3b wird ersichtlich, dass der Spulenträger 13 radiale Nuten 25 zur Aufnahme des Spulendrahts aufweist. Diese Nuten 25 sind radial von der Queröffnung 19 des Spulenträgers 13 getrennt.

Des Weiteren verfügt der Boden 17 des Spulenträgers 13 über eine Axialöffnung 27, die an beiden Deckseiten des Bodens 17 in eine umlaufende Nut 29; 31 übergeht (Fig. 2), um eine willkürliche Montage eines Spulenkerns 33, der eine Anschlussöffnung 35 aufweist, zu ermöglichen. Die Anschlussöffnung 35, die Axialöffnung 27 und ein Anschlusskanal 37 im Ventilgehäuse 5 verbinden einen Ventilrückraum 39 mit einem nicht dargestellten kolbenstangenseitigen Arbeitsraum.

In den Figuren 3a; 3b ist erkennbar, dass der Spulenträger 13 und die Spule 7 außenseitig von einer Deckschicht 41 eingehüllt werden und damit ein Spulengehäuse 43 bilden. Grundsätzlich besteht für die Deckschicht die Werkstoffauswahl zwischen einem Elastomer und einem Thermoplast. Zur Abdichtung der Spule verfügt der Spulenträger 13 über Dichtungskonturen 43a - 43d, Fig. 3c - 3e, die mit der Deckschicht 41 die Dichtfunktion übernehmen. Die Dichtungskonturen 43a - 43d sind in der Nähe von Körperkanten des Spulenträgers 13 angeordnet. So verfügt eine Nutseitenwand 13a des Spulenträgers radial außenseitig über eine Dichtungskontur 43c. Auch im Bereich der Durchgangsöffnung 19 sind ist mindestens eine Dichtungskontur 43a; 43b ausgeführt. Auch eine zweite Nutseitenwand 13b verfügt außenseitig über mindestens eine Dichtungskontur 43d. Die Deckschicht 41 wird spritztechnisch aufgetragen und dichtet die Spule 7 vollständig ab. Dabei vergrößern die Dichtungskonturen 43a - 43d die Oberflächengröße, wodurch der Verbund zwischen der Deckschicht 41 und dem Spulenträger 13 verbessert wird. In dem in den Figuren 3a und 3b dargestellten Montagezustand könnte kein Dämpfmedium in die Spule 7 eindringen. Bei einer thermoplastischen Deckschicht werden die Dichtungskonturen 43a - 43d angeschmolzen und so wird zusätzlich die Verbindung gesteigert. Die elastomerische Deckschicht 43 wird auf die Dichtungskonturen 43a - 43d aufvulkanisiert und geht mit den Dichtungskonturen in Formschluss. Man erreicht den Vorteil, dass eine Druckbelastung auf die Deckschicht 43 auch auf die Dichtungskonturen 43a - 43d übertragen wird, die dadurch höher vorgespannt sind und entsprechend eine verbesserte Dichtfunktion aufweisen.

An den Stirnseiten 45; 47 und an den Enden einer äußeren Mantelfläche 49 sind Dichtungselemente 51 a; 51 b; 51 c, 51 d mitangespritzt. Die Dichtungselemente 51 a; 51 b; 51 c; 51 d bestehen aus demselben Grundwerkstoff wie die Deckschicht 41. Zusätzliche Dichtungen, z. B. O-Ringe, sind nicht notwendig.

Die stirnseitigen Dichtungselemente 51 a, 51 b, Fig. 3e - 3f, fixieren die Spule 7 axial innerhalb des Ventilgehäuses 5 (Fig. 1). Zur radialen Positionierung des Spulengehäuses 43 innerhalb des Ventilgehäuses 5 dienen wiederum die Dichtungselemente 51 c, 51 d an der äußeren Mantelfläche 49.

Das Spulengehäuse 43 verfügt über ein weiteres Dichtungselement 51 e, das das Spulengehäuse zu der hohlen Kolbenstange 3 abdichtet.

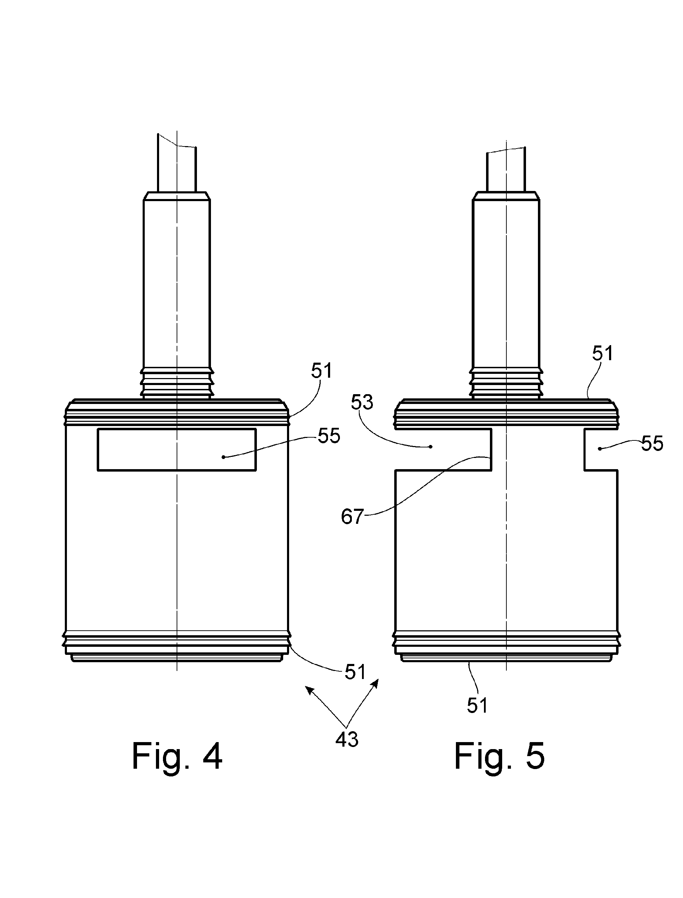

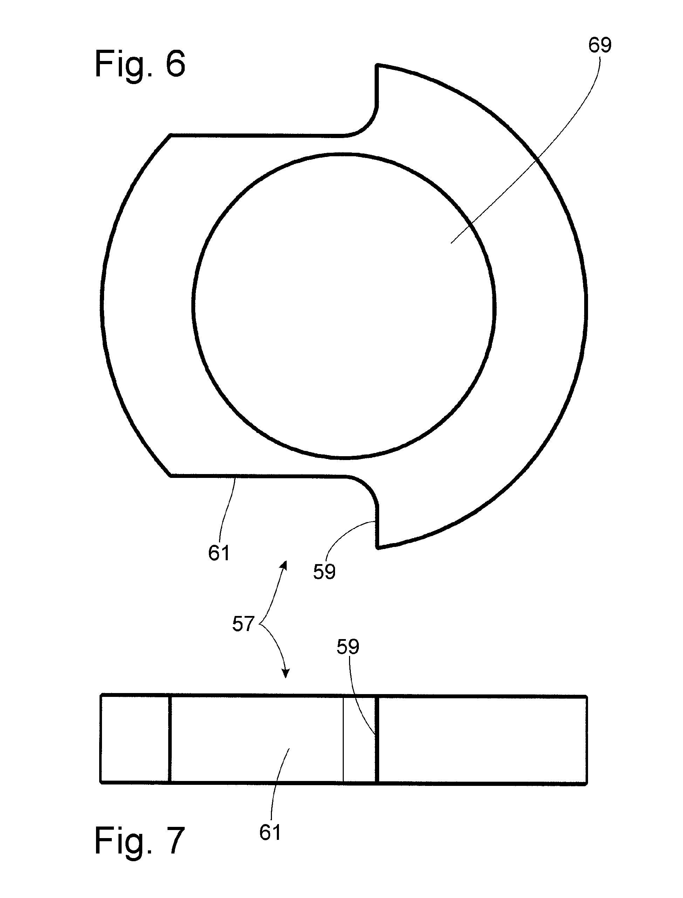

Die Figuren 4 und 5 zeigen das Spulengehäuse 43 mit den Dichtungselementen 51 als Baueinheit in zwei Ansichten. Das Spulengehäuse 43 verfügt an den Enden der Queröffnung 19 über zwei gegenüberliegende Fenster 53; 55 unterschiedlicher Breite. Grundsätzlich könnten die beiden gegenüberliegenden Fenster auch dieselbe Breite aufweisen. In das größere der beiden Fenster 53 ist ein in den Fig. 6 bis 9 dargestellter Rückschlusskörper 57 einschiebbar. Wenn die beiden gegenüberliegenden Fenster 53; 55 dieselbe Breite in Umfangsrichtung des Spulengehäuses 43 aufweisen, dann verfügt der Rückschlusskörper 57 über parallele sehnenförmige Abflachungen. In der vorliegenden Darstellung verfügt der Rückschlusskörper 57 über zwei Montageanschläge 59, die spiegelbildlich an seiner Umfangskontur ausgeführt sind. Zur Bildung der Montageanschläge 59 wird beidseitig eine randseitige Ausklinkung vorgenommen, so dass zwei parallele Abflachungen 61 mit endseitigen Anschlägen 59 entstehen. Die Abflachungen 61 gleiten auf parallelen Führungsbahnen 63; 65 (Fig. 3) in der Queröffnung 19 des Spulengehäuses 43 und bilden damit eine Aufnahme für den Rückschlusskörper 57. Über die Führungsbahnen 63; 65 in Verbindung mit den Abflachungen 61 werden eine eindeutige Montagerichtung und Montagebewegung erreicht. Die Montageanschläge 59, die an axialen Fensterrändern 67 anliegen, definieren die Montageendstellung des Rückschlusskörpers 57 im Spulengehäuse 43. Wenn der Spulenkern 33 in einer Aufnahmeöffnung 69 montiert ist, dann ist unabhängig von der Wirkung der Montageanschläge 59 eine weitere Verschiebebewegung des Rückschlusskörpers 57 blockiert.

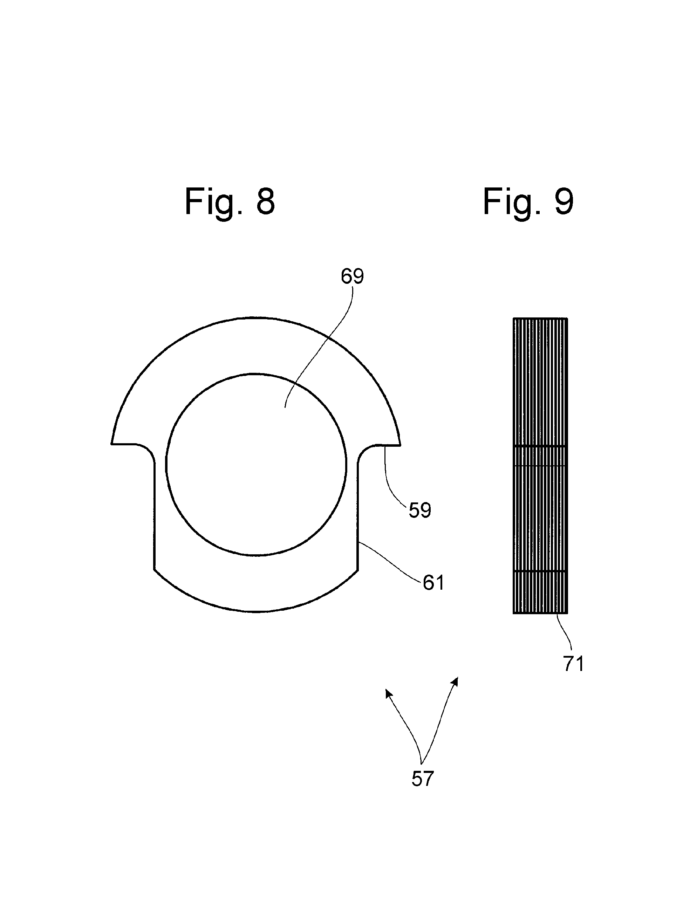

In den Fig. 6 und 7 ist der Rückschlusskörper 57 als massives Bauteil ausgeführt. Bevorzugt wird jedoch eine Ausgestaltung nach den Figuren 8 und 9, bei der der Rückschlusskörper 57 von geschichteten Blechelementen 71 gebildet wird. Diese Blechelemente 71 können durch Stanzpaketieren zu einer Baueinheit zusammengefasst werden.

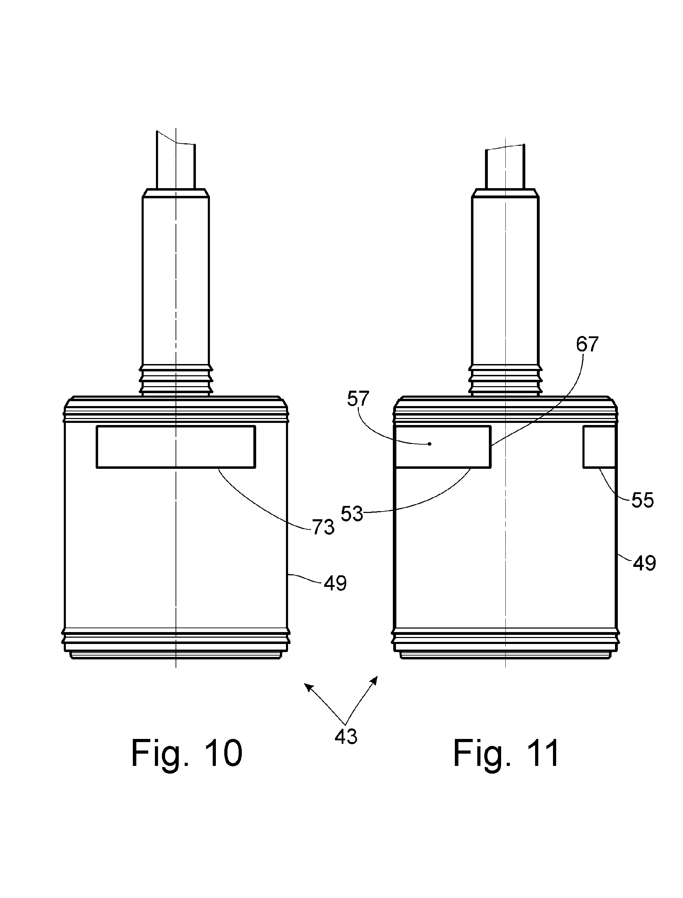

In den Figuren 10 und 11 ist der über mindestens ein Fenster 53 radial in das Spulengehäuse 43 einschiebbare Rückschlusskörper 57 dargestellt. Dabei ist erkennbar, dass der Rückschlusskörper 57 in der Endmontagestellung die Fenster 53; 55 im Spulengehäuse verschließt und damit auch das Spulengehäuse vollständig bis in die Mantelfläche 49 durchdringt. Die Fenster 53; 55 können umlaufende Dichtleisten 73 aufweisen.

### Bezugszeichen

- 1: verstellbares Dämpfungsventil
- 3: Kolbenstange
- 5: Ventilgehäuse
- 7: Spule
- 9: Ventilanker
- 11: Ventilfeder
- 13: Spulenträger
- 13a - 13b: Nutseitenwand
- 15: Hülsenabschnitt
- 17: Boden
- 19: Queröffnung
- 21: Axialöffnung
- 23: Hauptachse
- 25: Nut
- 27: Axialöffnung
- 29, 31: umlaufende Nut
- 33: Spulenkern
- 35: Anschlussöffnung
- 37: Anschlusskanal
- 39: Ventilrückraum
- 41: Deckschicht
- 43: Spulengehäuse
- 43a - 43d: Dichtungskonturen
- 45; 47: Stirnseite
- 49: Mantelfläche
- 51: Dichtungselemente
- 53; 55: Fenster
- 57: Rückschlusskörper
- 59: Montageanschlag
- 61: Abflachungen
- 63; 65: Führungsbahn
- 67: Fensterrand
- 69: Aufnahmeöffnung
- 71: Blechelement
- 73: Dichtleisten

## Patentansprüche

1. Verstellbares Dämpfventil (1) mit einem Ventilgehäuse (5), in dem ein Spulengehäuse (43) und ein ringförmiger Rückschlusskörper (57) angeordnet sind, die magnetisch leitend mit einem Ventilanker (9) verbunden sind, wobei der Rückschlusskörper (57) das Spulengehäuse (43) über mehrere Fenster (53; 55) radial durchdringt und randseitig Abflachungen (61) aufweist, **dadurch gekennzeichnet, dass** das mindestens ein Fenster (53) im Spulengehäuse (43) eine Breite aufweist, die mindestens der Breite des Rückschlusskörpers (57) in mindestens einer Montageposition entspricht, so dass der Rückschlusskörper (57) über das mindestens eine Fenster (53) radial in das Spulengehäuse (43) einschiebbar ist.

2. Verstellbares Dämpfventil nach Anspruch 1, **dadurch gekennzeichnet, dass** das Spulengehäuse (43) eine Führungsbahn (63; 65) für die Aufnahme des Rückschlusskörpers (57) aufweist.

3. Verstellbares Dämpfventil nach Anspruch 1, **dadurch gekennzeichnet, dass** das Fenster (53) zur Montage des Rückschlusskörpers (57) breiter ausgeführt ist als ein mindestens zweites Fenster (55).

4. Verstellbares Dämpfventil nach Anspruch 1, **dadurch gekennzeichnet, dass** der Rückschlusskörper (57) mindestens einen Montageanschlag (59) aufweist.

5. Verstellbares Dämpfventil nach Anspruch 1, **dadurch gekennzeichnet, dass** der Rückschlusskörper (57) in der Endmontagestellung die Fenster (53; 55) im Spulenkörper (43) verschließt.

6. Verstellbares Dämpfventil nach einem Anspruch 4, **dadurch gekennzeichnet**, der Rückschlusskörper (59) an seiner Umfangskontur zwei spiegelbildliche Anschläge (59) aufweist.

7. Verstellbares Dämpfventil nach dem Oberbegriff von Patentanspruch 1, wobei die Spule (7), der Rückschlusskörper (57) und ein Spulenträger (13) mittels eines Spritzverfahrens eine geschlossene Baueinheit bilden, und diese Baueinheit innerhalb des Ventilgehäuses (5) abgedichtet ist, **dadurch gekennzeichnet, dass** die Baueinheit angespritzte Dichtungselemente (51; 73) aufweist, die am Ventilgehäuse (5) anliegen.

8. Verstellbares Dämpfventil nach Anspruch 7, **dadurch gekennzeichnet, dass** die Dichtungselemente (51 a - 51 d) die Baueinheit innerhalb des Ventilgehäuses (5) positionieren.

9. Verstellbares Dämpfventil nach Anspruch 7, **dadurch gekennzeichnet, dass** die Fenster (53; 55) eine umlaufende Dichtleiste (73) aufweisen.

10. Verstellbares Dämpfventil nach dem Oberbegriff von Patentanspruch 1, **dadurch gekennzeichnet, dass** der Rückschlusskörper (57) von geschichteten Blechelementen (71) gebildet wird.

11. Verstellbares Dämpfventil nach Anspruch 10, **dadurch gekennzeichnet, dass** die geschichteten Blechelemente (71) mittels Stanzpaketieren miteinander verbunden sind.
